# FASCICULE DE BREVET EUROPEEN

(11) **EP 1 289 177 B1**
(45) Date de publication et mention de la délivrance du brevet: **26.01.2005**
(21) Numéro de dépôt: 02291886.6
(22) Date de dépôt: 25.07.2002
(51) Int. Cl.: H04B 10/18

(54) **Dipositif de compensation de la dispersion de polarisation dans un système de transmission optique**
Vorrichtung zur Polarisationsdispersionskompensation in einem optischen Übertragungssystem
Polarisation dispersion compensation device in an optical transmission system

(30) Priorité: 27.08.2001 FR 0111133
(43) Date de publication de la demande: 05.03.2003
(73) Titulaire: ALCATEL, 75008 Paris (FR)
(72) Inventeur: Lanne, Stéphanie, 75014 Paris (FR); Hamaide, Jean-Pierre, 91180 St. Germain les Arpajois (FR); Penninckx, Denis, 91620 Nozay (FR)
(74) Mandataire: Lamoureux, Bernard

(56) Documents cités:
- EP-A- 0 853 395
- EP-A- 1 100 217
- EP-A- 1 109 338
- WO-A-01/61385
- US-A- 5 473 457

## Description

L'invention se situe dans le domaine des transmissions de signaux par des moyens optiques et plus particulièrement des transmissions à haut débit sur des liaisons à longue distance utilisant des fibres optiques.

L'invention concerne un dispositif pour compenser, au moins partiellement, et dynamiquement, la dispersion de polarisation que l'on observe dans les systèmes de transmission à fibre optique.

On rappelle qu'un système de transmission à fibre optique comporte typiquement :
- un terminal émetteur utilisant au moins une onde porteuse optique polarisée dont il module la puissance et/ou la fréquence optique en fonction de l'information à transmettre,
- une liaison de transmission optique constituée d'au moins une section de fibre monomode acheminant le signal émis par le terminal émetteur,
- et un terminal récepteur recevant le signal optique transmis par la fibre.

La performance d'un système de transmission optique, notamment en termes de qualité de signal et de débit, est limitée notamment par les propriétés optiques de la liaison qui est le siège des phénomènes physiques ayant pour effet de dégrader les signaux optiques. Parmi les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent.

Un autre phénomène défavorable est la "dispersion modale de polarisation" (en l'anglais "Polarisation Mode Dispersion). Dans les conditions d'exploitation actuelles des transmissions optiques, ce phénomène n'est plus négligeable par rapport à la dispersion chromatique dès que l'on cherche à augmenter toujours davantage les longueurs des liaisons et surtout le débit.

On rappelle que les fibres sont le siège d'une dispersion de polarisation qui a par exemple pour effet qu'une impulsion de lumière polarisée émise par le terminal émetteur est reçue déformée après sa propagation dans une fibre et présente une durée supérieure à sa durée originale. Cette déformation est due au fait que le signal optique se dépolarise pendant la transmission à cause de la biréfringence des fibres. En première approximation, le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié et arrivant en premier, et d'un second signal impulsionnel à vitesse de propagation plus lente et arrivant avec un retard appelé "retard de groupe différentiel" ou DGD (de l'anglais "Differential Group Delay") qui dépend notamment de la longueur de la liaison. Ce retard de groupe différentiel DGD et ces deux états principaux de polarisation ou PSP (de l'anglais "Principal States of Polarisation") caractérisent donc la liaison.

Par conséquent, si le terminal émetteur émet un signal optique constitué d'une impulsion très brève, le signal optique reçu par le terminal récepteur est constitué de deux impulsions successives polarisées orthogonalement et ayant un décalage temporel égal au DGD. Comme la détection par le terminal consiste à fournir sous forme électrique une mesure de la puissance optique totale reçue, l'impulsion détectée aura une largeur temporelle augmentée en fonction de la valeur du DGD. Ce retard peut être de l'ordre de 50 picosecondes pour une fibre standard de 100 kilomètres de longueur. Ainsi, pour un signal binaire dont le débit est de 10 gigabits par seconde, ce retard atteint donc la moitié d'un temps bit, ce qui n'est pas acceptable. Ce problème est évidemment encore plus critique pour des débits supérieurs.

Un aspect important du phénomène de dispersion modale de polarisation est que la valeur du retard différentiel DGD et les états principaux de polarisation d'une liaison varient dans le temps en fonction de nombreux facteurs, tels que les vibrations et la température. Ainsi, contrairement à la dispersion chromatique, la dispersion de polarisation doit être considérée comme un phénomène aléatoire. En particulier, on caractérisera la dispersion de polarisation d'une liaison par une valeur dite "PMD" (de l'anglais "Polarisation Mode Dispersion Delay") définie comme la valeur moyenne de DGD mesuré.

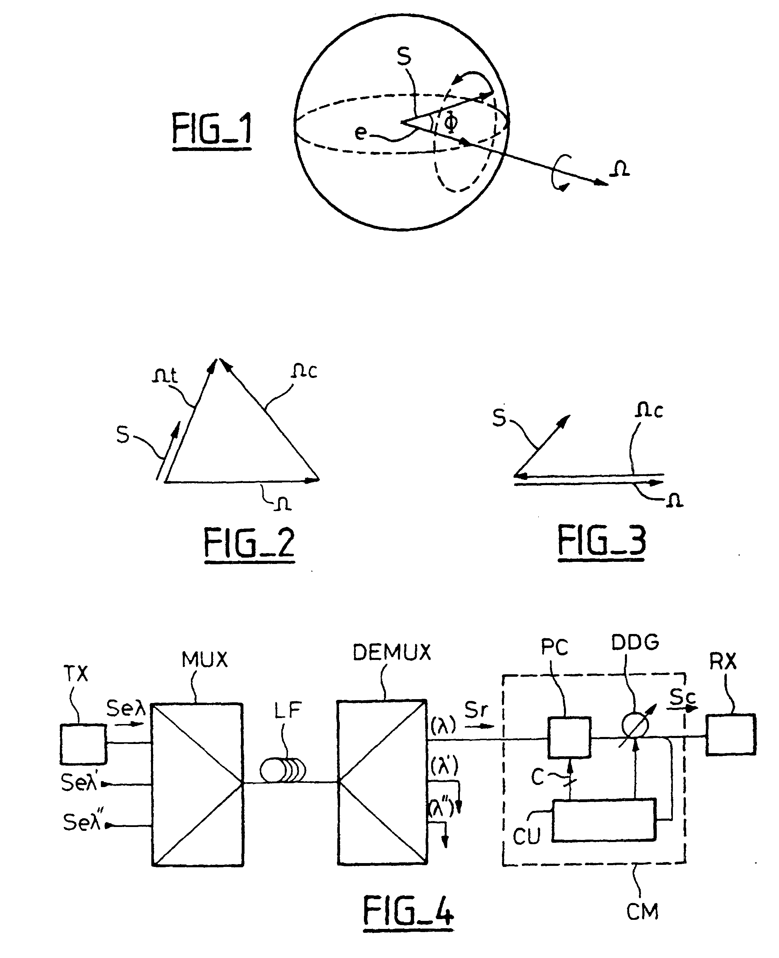

Plus précisément, on montre que la dispersion de polarisation peut être représentée par un vecteur de rotation aléatoire Ω dans l'espace de Poincaré où l'on représente habituellement les états de polarisation par un vecteur d'état de polarisation **S**, dit vecteur de Stokes, dont l'extrémité est située sur une sphère. La figure 1 montre les principaux vecteurs impliqués : le vecteur d'état de polarisation **S**, le vecteur de dispersion de polarisation Ω et le vecteur des états principaux de polarisation **e.** Φ est l'angle entre **S** et **Ω.**

Les vecteurs **e** et Ω ont la même direction et on a la relation : ∂***S***/∂ω = Ω⊗**S**, où ω est la pulsation de l'onde optique, le symbole ⊗ désignant le produit vectoriel.

Le module de Ω est la valeur de la différence de temps de groupe, c'est-à-dire du retard de propagation entre deux ondes polarisées selon les deux états principaux de polarisation de la liaison.

Un des principes de compensation de la dispersion de polarisation consiste à insérer entre la liaison et le récepteur un dispositif compensateur qui présente un retard de groupe différentiel et des états principaux de polarisation représentable dans l'espace de Poincaré par un vecteur **Ωc** tel que le vecteur **Ωt** résultant de la somme **Ω** + **Ωc** soit constamment parallèle à **S** ou nul. Ces deux cas sont illustrés respectivement par les figures 2 et 3.

Une conséquence du caractère aléatoire de la dispersion de polarisation est qu'un dispositif de compensation doit être adaptatif et comporter un générateur de retard de groupe différentiel DDG (par exemple une fibre à maintien de polarisation) qui assure un retard de groupe différentiel au moins égal aux valeurs maximales de retard différentiel que l'on veut compenser. En pratique la compensation doit viser à ce que la direction des états principaux de polarisation **e** de l'ensemble de liaison (y compris le dispositif compensateur) coïncide en permanence avec la direction du vecteur de polarisation **S** du signal reçu. En d'autres termes, l'angle Φ défini précédemment devrait être maintenu aussi petit que possible

Une réalisation d'un dispositif de compensation de la dispersion modale de polarisation est décrite dans la demande de brevet européen EP-A-853 395 déposée le 30 décembre 1997 et publiée le 15 juillet 1998.

La figure 4 montre un exemple de système de transmission optique muni d'un tel dispositif de compensation.

Il s'agit ici d'un système à multiplexage en longueur d'onde prévu pour véhiculer plusieurs canaux spectraux sous la forme de signaux Seλ, Seλ', Seλ" portés respectivement par les longueurs d'onde λ, λ', λ". Chaque canal, par exemple Seλ, est issu d'un terminal émetteur TX émettant un signal optique ayant la forme d'une modulation d'amplitude d'une onde porteuse polarisée. Les canaux sont combinés dans un multiplexeur MUX dont la sortie est couplée à une liaison optique de transmission LF. Cette liaison est typiquement constituée d'une fibre optique, mais plus généralement elle peut comporter divers composants optiques (non représentés) tels que des amplificateurs optiques disposés en amont et/ou en aval de la fibre et/ou des compensateurs de dispersion chromatique. La liaison peut aussi être composée de plusieurs sections de fibre entre lesquels sont placés des amplificateurs optiques.

L'extrémité de la liaison rejoint au moins un terminal récepteur, par exemple RX, par l'intermédiaire d'un démultiplexeur DEMUX ayant pour fonction d'extraire le canal spectral Sr destiné au récepteur RX.

Le système comporte un dispositif de compensation de la dispersion de polarisation CM disposés entre le démultiplexeur DEMUX et le récepteur RX de façon à fournir à ce dernier un signal optique compensé Sc. Le dispositif CM comporte un contrôleur de polarisation PC, des moyens DDG pour engendrer un retard de groupe différentiel de compensation DGDc entre deux modes de polarisation orthogonaux et des moyens d'asservissement CU du contrôleur de polarisation PC.

Le contrôleur de polarisation PC est commandé par les moyens d'asservissement CU de sorte que la valeur d'un paramètre de mesure p représentatif de la qualité du signal optique compensé Sc tende vers un extremum correspondant à une qualité maximale du signal.

Selon une première possibilité décrite dans la demande précitée, les moyens DDG engendrent un retard de groupe différentiel fixe et sont par exemple constitués d'une fibre à maintien de polarisation ou PMF (de l'anglais "Polarisation Maintaining Fiber"), qui a la propriété de procurer un retard différentiel fixe avec des états principaux de polarisation invariables. Selon une variante, les moyens DDG peuvent être ajustables et commandés également par les moyens d'asservissement CU.

Comme indiqué dans la demande précitée, le paramètre de mesure p peut être le degré de polarisation (DOP) du signal Sc. L'asservissement sera alors conçu pour maximiser ce paramètre. D'autres paramètres peuvent être employées comme par exemple la largeur spectrale de la modulation du signal électrique obtenu par détection du signal optique Sc. Dans ce cas, l'asservissement sera conçu pour maximiser cette largeur. On peut aussi utiliser comme paramètre un produit pondéré des deux paramètres précédents, c'est-à-dire un paramètre de la forme DOP^{x}.Δω^{y}, où DOP est le degré de polarisation, Δω la largeur spectrale, x et y des coefficients de pondération optimisés pour le système de transmission concerné.

La demande de brevet européen EP-A-1100217 décrit un système de transmission optique comportant un émetteur relié à un récepteur par une liaison optique composée en particulier de plusieurs fibres optiques munies de circuits de compensation de PMD. Selon une variante de réalisation, une section d'ajustement de polarisation est disposée juste après l'émetteur. Cette section permet de fixer à l'installation du système l'état de polarisation du signal émis de façon à minimiser l'influence de la PMD sur le récepteur.

En pratique, les moyens d'asservissement CU du dispositif de compensation comportent des moyens de calcul programmés pour exécuter un algorithme d'optimisation visant à déterminer les commandes à appliquer notamment au contrôleur de polarisation pour que la valeur du paramètre p soit maintenue à un extremum correspondant à la qualité maximale du signal.

L'algorithme d'optimisation est de type multidimensionnel de façon à piloter à la fois au moins deux grandeurs d'ajustement C du contrôleur de polarisation PC. Ces grandeurs déterminent une variation d'état de polarisation des signaux optiques traversant le contrôleur de polarisation PC, cette variation étant représentée habituellement par deux angles ε et θ.

Il existe de nombreux algorithmes de ce type, comme par exemple un algorithme conçu pour mettre en oeuvre la méthode dite de Powell, telle que décrite aux pages 412 à 420 du manuel intitulé "Numerical Recipes in C" par William H. Press et al, Cambridge University Press, 1994.

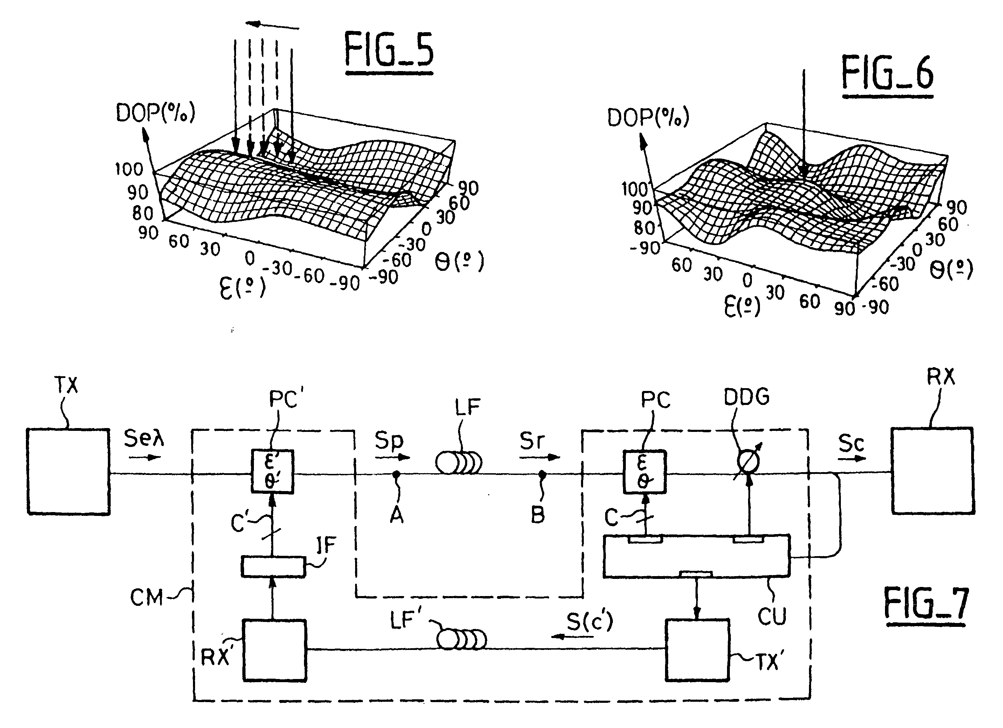

Pour expliquer le fonctionnement du dispositif de compensation, on peut représenter les variations du paramètre p, par exemple le degré de polarisation DOP (exprimé en %), en fonction des angles ε et θ précités (exprimés en degrés) sous la forme d'une surface, comme le montre la figure 5.

Lors de son exécution, en fonction de mesures successives du paramètre p, l'algorithme calcule périodiquement des valeurs à donner aux grandeurs d'ajustement C du contrôleur de polarisation pour optimiser (maximiser ou minimiser selon le cas) le paramètre p. Ce processus est schématisé sur la figure 5 par des flèches verticales pointant vers des valeurs du degré de polarisation DOP obtenues à la fin de cycles successifs de calcul et de réactualisations correspondantes des grandeurs d'ajustement C. Selon l'exemple représenté, en partant d'un état pointé par la flèche de droite, l'état évolue vers la gauche pour atteindre au bout de plusieurs cycles une valeur maximale du degré de polarisation.

Or, en analysant le fonctionnement de divers systèmes de transmission munis de tels moyens de compensation, il a été constaté que l'ajustement du contrôleur de polarisation se stabilise parfois sur des états qui assurent une compensation très imparfaite. Cela s'explique par le fait que la fonction représentative des variations du paramètre p en fonction de ε et θ varie au cours du temps et peut présenter temporairement des extremums locaux. Une telle situation est illustrée par la figure 6. Ainsi, un système peut évoluer relativement lentement de l'état représenté à la figure 5 à celui représenté à figure 6, avec pour conséquence que le point de convergence de l'algorithme d'optimisation finit par correspondre à un maximum local du degré de polarisation DOP alors qu'un maximum absolu aurait pu être atteint avec un autre réglage du contrôleur de polarisation.

Il en résulte que la compensation n'est pas optimale, ce qui influe sur les performances de la transmission, d'autant plus que le paramètre p peut rester verrouillé sur un extremum local pendant des durées relativement longues. Ces durées peuvent en fait être très variables : de l'ordre de quelques secondes, de quelques heures voire de quelques jours. Par rapport à une compensation optimale, on conçoit donc que les informations reçues dans ces conditions vont présenter un taux d'erreur accru pouvant porter sur un grand nombre de données, en particulier à haut débit.

Pour résoudre ce problème, on pourrait envisager une solution au niveau l'algorithme. En effet, l'algorithme peut être conçu pour détecter que le paramètre p est verrouillé sur un extremum local et dans ce cas exécuter une procédure de recherche d'un autre point de convergence correspondant à un autre extremum, ce processus se répétant tant qu'une convergence sur l'extremum absolu n'est pas atteinte. Cette méthode n'est toutefois pas acceptable car elle implique qu'entre deux extremums successifs le paramètre p passe par des valeurs plus défavorables.

Aussi, l'invention a pour but d'améliorer l'efficacité de la compensation de la dispersion de polarisation en tenant compte des observations précédentes.

Dans ce but, l'invention a pour objet un dispositif de compensation de dispersion de polarisation pour système de transmission optique comportant une liaison optique de transmission ayant une extrémité d'émission pour recevoir un signal optique émis et une extrémité de réception pour fournir un signal optique transmis, ce dispositif de compensation comportant :
- au moins un premier contrôleur de polarisation disposé pour recevoir ledit signal optique transmis,
- des moyens pour engendrer un retard différentiel entre deux modes de polarisation orthogonaux, ces moyens étant disposés en aval de ce contrôleur de façon à fournir un signal optique compensé,
- des moyens d'asservissement pour commander le premier contrôleur de polarisation en fonction d'un paramètre de mesure représentatif de la qualité dudit signal optique compensé et de façon à optimiser ladite qualité,
- des moyens auxiliaires de compensation aptes à modifier l'état de polarisation dudit signal optique émis. Selon l'invention, lesdits moyens auxiliaires de compensation sont prévus pour détecter si le paramètre de mesure possède une valeur stable en comparant entre elles des valeurs successives prises par ledit paramètre de mesure et pour modifier ledit état de polarisation dudit signal optique émis si ledit paramètre de mesure possède une valeur stable.

Cette solution apporte une amélioration due au fait que dans les conditions définies ci-dessus, des variations de l'état de polarisation du signal émis Sp entraînent des modifications de la fonction représentative des variations du paramètre de mesure à optimiser en fonction du réglage du premier contrôleur de polarisation, de telle sorte que cette fonction finit par ne plus présenter l'extremum local sur lequel l'algorithme d'optimisation de l'asservissement a fait convergé le paramètre de mesure. Ainsi, le paramètre p ne reste jamais longtemps verrouillé sur un extremum local très défavorable.

L'efficacité de la solution proposée est aussi améliorée par le fait que l'algorithme d'optimisation peut maintenir en permanence le paramètre au voisinage d'un extremum. En effet, les modifications de l'état de polarisation du signal optique émis n'interviennent pas tant que le paramètre de mesure n'a pas convergé vers un maximum. Ainsi, en prévoyant des modifications relativement lentes de l'état de polarisation, l'exécution de l'algorithme d'optimisation n'est pratiquement pas perturbée. polarisation du signal optique émis si le paramètre de mesure possède une valeur stable représentative d'une qualité du signal optique compensé inférieure à une qualité de référence.

Cette variante évite que des modifications de l'état de polarisation du signal optique émis interviennent alors que le paramètre de mesure a convergé vers un maximum absolu ou local garantissant une qualité de signal optimal ou considérée comme suffisante.

Avantageusement, cette qualité de référence correspondra sensiblement à la meilleure qualité du signal optique compensé observable avec le système de transmission optique considéré. Grâce à cette disposition, l'état de polarisation du signal optique émis a moins de chance d'être modifié si le paramètre de mesure a convergé vers un maximum absolu et on aura une forte probabilité qu'il soit modifié si le paramètre de mesure a convergé vers un maximum local.

Selon un autre aspect de réalisation de l'invention permettant de déterminer au mieux et en permanence cette qualité de référence, ladite qualité de référence correspondant à une valeur de référence du paramètre de mesure, lesdits moyens auxiliaires de compensation sont prévus pour comparer ladite valeur stable du paramètre de mesure à ladite valeur de référence et pour réactualiser ladite valeur de référence en fonction de valeurs extrémales atteintes par le paramètre de mesure.

En pratique, les moyens auxiliaires de compensation élaborent des grandeurs d'ajustement d'un élément optique, tel qu'un contrôleur de polarisation, qui produit les modifications correspondantes de l'état de polarisation du signal optique émis. Généralement ce sont des moyens de commande numériques qui fournissent ces grandeurs d'ajustement dont les variations sont donc naturellement discontinues. Selon encore d'autres aspects de réalisation de l'invention, on prévoira avantageusement que chacune de ces variations entraîne une modification de la direction du vecteur d'état de polarisation dudit signal optique émis inférieure à 10 degrés et de préférence inférieures à 3 degrés.

L'invention a aussi pour objet un système de transmission optique incorporant le dispositif de compensation défini ci-dessus.

D'autres aspects et avantages de l'invention apparaîtront dans la suite de la description en référence aux figures.
- La figure 1 représente l'espace de Poincaré déjà commenté précédemment.
- Les figures 2 et 3 illustrent deux principes de compensation de dispersion de polarisation, également commentés précédemment.
- La figure 4 représente schématiquement un système de transmission optique comportant un dispositif de compensation selon l'état de la technique et également commenté précédemment.
- Les figures 5 et 6 illustrent des fonctions représentatives des variations du degré de polarisation DOP en fonction des angles ε et θ de variation de l'état de polarisation engendrés par le contrôleur de polarisation d'un compensateur.
- La figure 7 représente schématiquement un système de transmission optique comportant le dispositif de compensation selon l'invention.
- La figure 8 représente un organigramme expliquant le fonctionnement du dispositif de compensation selon l'invention.

La figure 7 montre schématiquement et à titre d'exemple un système de transmission optique muni d'un dispositif de compensation selon l'invention.

Comme dans le système de la figure 4, on retrouve un terminal émetteur TX couplé à un terminal récepteur RX par l'intermédiaire d'une liaison optique de transmission LF et d'un dispositif de compensation de la dispersion de polarisation CM. Pour simplifier l'exposé, le système ne représente que les éléments associés à un seul canal WDM.

Le dispositif de compensation CM est intercalé entre une extrémité B (appelée extrémité de réception) de la liaison LF et le terminal récepteur RX. Ainsi, le dispositif de compensation CM reçoit de l'extrémité de réception B le signal transmis Sr et délivre au terminal récepteur RX le signal compensé Sc.

Conformément à l'invention, le dispositif de compensation CM est en outre muni de moyens auxiliaires de compensation comportant un second contrôleur de polarisation PC' intercalé entre le terminal émetteur TX et l'extrémité A (appelée extrémité d'émission) de la liaison LF. Ainsi, le contrôleur de polarisation PC' reçoit le signal optique Seλ issu du terminal émetteur TX et délivre à l'extrémité d'émission A le signal Sp (appelée signal optique émis).

Le second contrôleur de polarisation PC' applique au signal Seλ une variation d'état de polarisation ε' et θ' fonction d'au moins deux grandeurs d'ajustement C' déterminées par les moyens d'asservissement CU et transmises par un canal de commande. Ce canal peut par exemple emprunter un système de transmission en retour existant constitué d'un second terminal émetteur TX', d'une seconde liaison de transmission LF' et d'un second terminal récepteur RX'. Une interface de commande IF disposée entre le second terminal récepteur RX' et le second contrôleur PC' est prévue pour élaborer des signaux de commande du second contrôleur PC'. Ces signaux matérialisent les grandeurs d'ajustement C' issues des moyens d'asservissement CU et portée par un signal S(C') transmis par la liaison LF'.

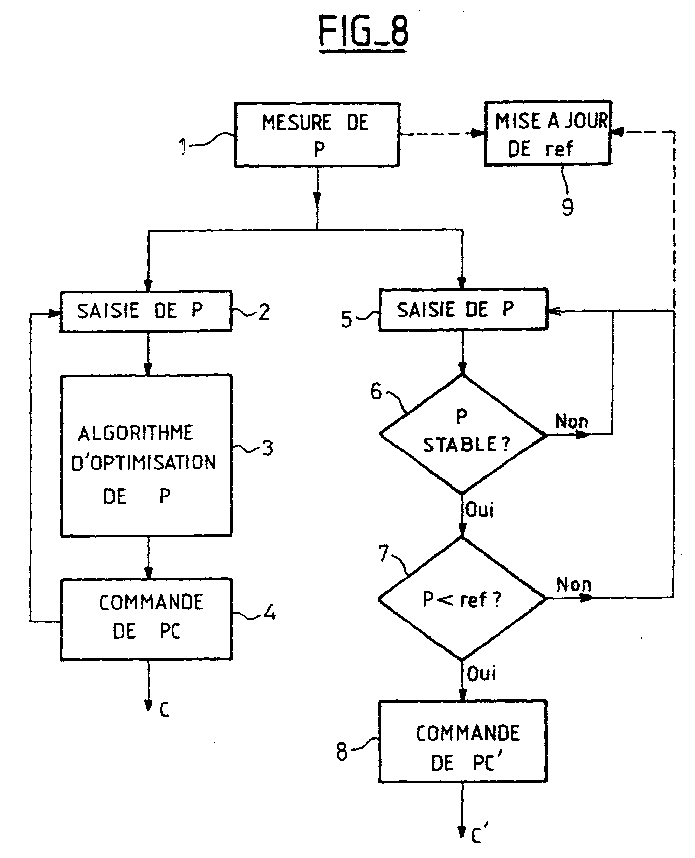

Pour expliquer le fonctionnement du dispositif, il convient de se reporter à l'organigramme de la figure 8. Cet organigramme schématise les principales opérations effectuées par les moyens d'asservissement CU.

Une première opération 1 consiste à réaliser une mesure échantillonnée en temps réel sous forme numérique du paramètre p choisi. En fonction de valeurs successives de mesure 2 du paramètre p, un algorithme d'optimisation 3 calcule périodiquement des valeurs à donner aux grandeurs d'ajustement C du premier contrôleur de polarisation PC pour optimiser (maximiser ou minimiser selon le cas) le paramètre p. A la fin de chacun des cycles successifs de calcul, un signal de commande correspondant est appliqué au premier contrôleur de polarisation PC (opération 4).

Ces opérations 1 à 4 font partie des opérations effectuées dans une boucle principale d'asservissement conforme à des dispositifs de compensation connus et ne nécessitent donc pas d'explications plus détaillées.

Conformément à l'invention, les moyens d'asservissement CU comportent une boucle auxiliaire d'asservissement effectuant des opérations supplémentaires 5 à 8 décrites ci-dessous.

En fonction de valeurs successives de mesure 5 du paramètre p, un module de calcul 6 contrôle périodiquement si ce paramètre a atteint une valeur stable, c'est-à-dire si l'exécution de l'algorithme d'optimisation 3 a fait convergé ce paramètre sur un extremum. Si c'est le cas, un module de test 7 compare périodiquement la valeur stable détectée précédemment à une valeur de référence ref.

Dans le cas par exemple où l'extremum est un maximum, si cette valeur stable est inférieure la valeur de référence ref, une opération 8 élabore un signal de commande destiné au second contrôleur de polarisation PC' de façon à apporter une modification aux grandeurs d'ajustement C' de ce contrôleur et par conséquent une modification de la variation d'état de polarisation ε' et θ' appliquée au signal Sp. Cette modification est par exemple de type aléatoire et d'amplitude limitée.

Dans une version simplifiée, le module de test 7 pourrait être supprimé sans toutefois que la compensation perde totalement son efficacité.

Si par contre ce module de test 7 est prévu, il pourra être avantageux de prévoir aussi un module de mise à jour 9 conçu pour réactualiser la valeur de référence ref en fonction de valeurs extrémales atteintes par le paramètre de mesure p. Ainsi, même si les conditions de transmission évoluent dans le temps, on assure que l'état de polarisation du signal optique émis ne sera modifié que si le paramètre de mesure converge vers un maximum local.

La mise en oeuvre pratique des diverses fonctions énumérées ci-dessus peut faire l'objet de nombreuses variantes mais ne pose pas de difficultés particulières aux concepteurs de systèmes de transmission. En effet, cette mise en oeuvre fait appel aux techniques classiques de programmation des microcontrôleurs.

Ainsi, pour contrôler si le paramètre de mesure p a atteint une valeur stable, le module de calcul 6 sera par exemple programmé pour comparer entre elles un certain nombre de valeurs successives prises par le paramètre et déterminer qu'une valeur stable est atteinte si la moyenne des différences entre ces valeurs successives est inférieure à un seuil prédéterminé.

Il convient maintenant de rappeler que l'efficacité de la compensation est d'abord conditionnée par le temps de réponse de l'ensemble de la boucle principale d'asservissement. Il dépend essentiellement de la rapidité d'exécution de l'algorithme d'optimisation 3 et du temps de réponse du premier contrôleur de polarisation PC.

Le temps de réponse de la boucle principale d'asservissement doit être compatible avec la rapidité des fluctuations de PMD observées en pratique. Sachant que des perturbations peuvent amener le vecteur de polarisation **S** défini précédemment à effectuer jusqu'à 50 rotations par seconde, on peut en déduire le temps de réponse minimal à imposer à la boucle principale d'asservissement, selon la qualité de signal souhaitée. En pratique, il convient par exemple d'avoir un temps de réponse inférieur à une milliseconde.

Ces contraintes conduisent à choisir comme premier contrôleur de polarisation PC un composant rapide, par exemple un composant du commerce réalisé sur niobate de lithium. Par contre, ces contraintes sont sans conséquences sur les performances exigées du second contrôleur de polarisation PC'. Ce second contrôleur pourra donc être choisi parmi des composants à plus faible coût (à base de cristaux liquides, "fiber squeezer") présentant un temps de réponse supérieur à celui du premier contrôleur de polarisation.

De plus, la boucle principale d'asservissement doit présenter une précision suffisante pour que l'angle Φ pouvant exister entre la direction **e** des états principaux de polarisation de l'ensemble de liaison compris entre le signal émis Sp et le signal compensé Sc, et la direction du vecteur de polarisation **S** du signal compensé Sc reste à tout instant inférieure à une valeur donnée permettant l'amélioration souhaitée de la qualité du signal.

Expérimentalement, on a trouvé que cet angle devait en général rester inférieur à 10 degrés et de préférence inférieur à 3 degrés. Dans ces conditions, comme les modifications de la variation d'état de polarisation ε' et θ' due au second contrôleur de polarisation PC' sont déclenchées par l'opération 8 sous la forme de variations discontinues des grandeurs d'ajustement C', il conviendra donc que chacune de ces variations discontinues entraîne une variation de l'angle Φ inférieure à 10 degrés et de préférence inférieure à 3 degrés.

En d'autres termes, chacune des variations discontinues des grandeurs d'ajustement C' devra de préférence entraîner une modification de la direction du vecteur d'état de polarisation du signal optique émis Sp inférieure à 10 degrés et de préférence inférieures à 3 degrés.

On peut remarquer que le fait de déclencher des modifications successives de la variation d'état de polarisation ε' et θ' seulement si le paramètre de mesure p a atteint une valeur stable assure automatiquement que ces modifications surviennent à un rythme inférieur au temps de réponse de la boucle principale d'asservissement. Ceci garantit que la boucle auxiliaire d'asservissement perturbe le fonctionnement de la boucle principale de façon parfaitement contrôlée.

## Revendications

1. Dispositif de compensation (CM) de dispersion de polarisation pour système de transmission optique comportant une liaison optique de transmission (LF) ayant une extrémité d'émission (A) pour recevoir un signal optique émis (Sp) et une extrémité de réception (B) pour fournir un signal optique transmis (Sr), ce dispositif de compensation (CM) comportant :
- au moins un premier contrôleur de polarisation (PC) disposé pour recevoir ledit signal optique transmis (Sr),
- des moyens (DDG) pour engendrer un retard différentiel entre deux modes de polarisation orthogonaux, ces moyens (DDG) étant disposés en aval de ce contrôleur (PC) de façon à fournir un signal optique compensé (Sc),
- des moyens d'asservissement (CU) pour commander le premier contrôleur de polarisation (PC) en fonction d'un paramètre de mesure (p) représentatif de la qualité dudit signal optique compensé (Sc) et de façon à optimiser ladite qualité,
- et des moyens auxiliaires de compensation aptes à modifier l'état de polarisation dudit signal optique émis (Sp),
**caractérisé en ce que** lesdits moyens auxiliaires de compensation (CU, PC', TX', RX') sont prévus pour détecter si le paramètre de mesure (p) possède une valeur stable en comparant entre elles des valeurs successives prises par ledit paramètre de mesure (p) et pour modifier ledit état de polarisation dudit signal optique émis (Sp) si ledit paramètre de mesure (p) possède une valeur stable.

2. Dispositif selon la revendication 1, **caractérisé en ce que** lesdits moyens auxiliaires de compensation (CU, PC', TX', RX') sont aptes à modifier l'état de polarisation dudit signal optique émis (Sp) si ledit paramètre de mesure (p) possède une valeur stable représentative d'une qualité du signal optique compensé (Sc) inférieure à une qualité de référence.

3. Dispositif selon la revendication 2, **caractérisé en ce que** ladite qualité de référence correspond sensiblement à la meilleure qualité du signal optique compensé (Sc) observable avec ledit système de transmission optique.

4. Dispositif selon la revendication 3, **caractérisé en ce que** ladite qualité de référence correspondant à une valeur de référence (ref) du paramètre de mesure (p), lesdits moyens auxiliaires de compensation (CU, PC', TX', RX') sont prévus pour comparer ladite valeur stable du paramètre de mesure (p) à ladite valeur de référence (ref) et pour réactualiser ladite valeur de référence (ref) en fonction de valeurs extrémales atteintes par le paramètre de mesure (p).

5. Dispositif selon l'une des revendications 1 à 4, **caractérisé en ce que** lesdits moyens auxiliaires de compensation (CU, PC', TX', RX') comportent un second contrôleur de polarisation (PC') placé en amont de ladite liaison optique de transmission (LF) de façon à fournir à ladite extrémité d'émission (A) ledit signal optique émis (Sp).

6. Dispositif selon la revendication 5, **caractérisé en ce que** ledit second contrôleur de polarisation (PC') présente un temps de réponse supérieur à celui du premier contrôleur de polarisation (PC).

7. Dispositif de compensation selon l'une des revendications 1 à 6, **caractérisé en ce que** lesdites modifications de l'état de polarisation dudit signal optique émis (Sp) résultant de variations de grandeurs d'ajustement (C'), lesdites variations sont discontinues et telles que chacune desdites variations entraîne une modification de la direction du vecteur d'état de polarisation dudit signal optique émis (Sp) inférieure à 10 degrés.

8. Dispositif de compensation selon la revendication 7, **caractérisé en ce que** chacune desdites variations entraîne une modification de la direction du vecteur d'état de polarisation dudit signal optique émis (Sp) inférieure à 3 degrés.

9. Système de transmission optique, **caractérisé en ce qu'**il comporte un dispositif de compensation selon l'une des revendications 1 à 8.

## Claims

1. A polarization dispersion compensator (CM) for an optical transmission system including an optical transmission line (LF) having a sending end (CA) for receiving a sent optical signal (Sp) and a receiving end (B) for supplying a transmitted optical signal (Sr), this compensator (CM) including:
- at least a first polarization controller (PC) adapted to receive said transmitted optical signal (Sr),
- a generator (DDG) for generating a differential group delay between two orthogonal modes of polarization, this generator (DDG) being disposed downstream of this controller (PC) to supply a compensated optical signal (Sc),
- a control unit (CU) for controlling the first polarization controller (PC) as a function of a measurement parameter (p) representative of the quality of said compensated optical signal (Sc) and in such a fashion as to optimize said quality,
- and an auxiliary compensator adapted to modify the state of polarization of said sent optical signal (Sp),
**characterized in that** said auxiliary compensation means (CU, PC', TX', RX') are adapted to detect if the measurement parameter (p) has a stable value by comparing with each other successive values taken by said measurement parameter (p) and to modify said polarization state of said sent optical signal (Sp) if said measurement parameter (p) has a stable value.

2. A device according to claim 1 **characterized in that** said auxiliary compensator (CU, PC', TX', RX') is adapted to modify the state of polarization of said sent optical signal (Sp) if said measurement parameter (p) has a stable value representative of a quality of the compensated optical signal (Sc) that is less than a reference quality.

3. A device according to claim 2 **characterized in that** said reference quality corresponds substantially to the best quality of the compensated optical signal (Sc) that can be obtained with said optical transmission system.

4. A device according to claim 3 **characterized in that** said reference quality corresponding to a reference value (ref) of the measurement parameter (p), said auxiliary compensator (CU, PC', TX', RX'), is adapted to compare said stable value of the measurement parameter (p) to said reference value (ref) and to update said reference value (ref) as a function of maximum and minimum values reached by the measurement parameter (p).

5. A device according to any of claims 1 to 4 **characterized in that** said auxiliary compensator (CU, PC', TX', RX') includes a second polarization controller (PC') at the upstream end of said optical transmission line (CF) to supply said sent optical signal (Sp) to said sending end (A).

6. A compensator according to claim 5 **characterized in that** said second polarization controller (PC') has a response time greater than that of the first polarization controller (PC).

7. A compensator according to any of claims 1 to 6 **characterized in that** said modifications of the state of polarization of said sent optical signal (Sp) are the result of variations of control parameters (C') and said variations are discontinuous and such that each of said variations leads to a modification of the direction of the state of polarization vector of said sent optical signal (Sp) of less than 10 degrees.

8. A compensator according to claim 7 **characterized in that** each of said variations leads to a modification of the direction of the state of polarization vector of said sent optical signal (Sp) of less than 3 degrees.

9. An optical transmission system **characterized in that** it includes a compensator according to any of claims 1 to 8.

## Patentansprüche

1. Vorrichtung (CM) zur Kompensation der Polarisationsdispersion für ein optisches Übertragungssystem, beinhaltend eine optische Übertragungsstrecke (LF) mit einem senderseitigen Endpunkt (A) zum Empfangen eines ausgesandten optischen Signals (Sp) und einem Empfangsende (B) zum Liefern eines übertragenen optischen Signals (Sr), wobei diese Vorrichtung beinhaltet:
- Mindestens einen Polarisationscontroller (PC), der so angeordnet ist, daß er das besagte übertragene optische Signals (Sr) empfängt,
- Vorrichtungen (DDG) zur Erzeugung einer differentiellen Verzögerung zwischen zwei orthogonalen Polarisationsmoden, wobei diese Vorrichtungen (DDG) derart im Signalweg vor diesem Controller (PC) angeordnet sind, daß sie ein kompensiertes optisches Signal (Sc) liefern,
- Steuerungsvorrichtungen (CU) zum Ansteuern des ersten Polarisationscontrollers (PC) in Abhängigkeit von einem Meßparameter (p), der für die Qualität des besagten kompensierten optischen Signals (Sc) repräsentativ ist, sowie zur Optimierung der besagten Qualität,
- sowie zusätzliche Kompensationsvorrichtungen, die geeignet sind, den Polarisationszustand des besagten ausgesandten optischen Signals (Sp) zu modifizieren, **dadurch gekennzeichnet, daß** die besagten zusätzlichen Kompensationsvorrichtungen (CU, PC', TX', RX') dafür vorgesehen sind, zu ermitteln, ob der Meßparameter (p) einen stabilen Wert besitzt, indem sie aufeinanderfolgende Werte, die vom besagten Meßparameter (p) aufgenommen wurden, untereinander vergleichen und ferner den besagten Polarisationszustand des besagten ausgesandten optischen Signals (Sp) modifizieren, wenn der besagte Meßparameter (p) einen stabilen Wert besitzt.

2. Vorrichtung gemäß Anspruch 1, **dadurch gekennzeichnet, daß** die besagten zusätzlichen Kompensationsvorrichtungen (CU, PC', TX', RX') geeignet sind, den besagten Polarisationszustand des besagten ausgesandten optischen Signals (Sp) zu modifizieren, wenn der besagte Meßparameter (p) einen für eine Qualität des kompensierten optischen Signals (Sc) stabilen Wert besitzt, der unter demjenigen einer Referenzqualität liegt.

3. Vorrichtung gemäß Anspruch 2, **dadurch gekennzeichnet, daß** die besagte Referenzqualität ungefähr der besten Qualität des kompensierten optischen Signals (Sc) entspricht, die beim betrachteten optischen Übertragungssystem zu beobachten ist.

4. Vorrichtung gemäß Anspruch 3, **dadurch gekennzeichnet, daß** die besagte Referenzqualität einem Referenzwert (ref) des Meßparameters (p) entspricht, wobei die besagten zusätzlichen Kompensationsvorrichtungen (CU, PC', TX', RX') dafür vorgesehen sind, den besagten stabilen Wert des Meßparameters (p) mit dem besagten Referenzwert (ref) zu vergleichen und den besagten Referenzwert (ref) in Abhängigkeit von Extremwerten neu zu aktualisieren, die durch den Meßparameter (p) erreicht werden.

5. Vorrichtung gemäß einem oder mehreren der Ansprüche 1 bis 4, **dadurch gekennzeichnet, daß** die besagten zusätzlichen Kompensationsvorrichtungen (CU, PC', TX', RX') einen zweiten Polarisationscontroller (PC') beinhalten, der im Signalweg vor der besagten optischen Übertragungsstrecke (LF) angeordnet ist und dem besagten senderseitigen Endpunkt (A) das besagte ausgesandte optische Signal (Sp) zuführt.

6. Vorrichtung gemäß Anspruch 5, **dadurch gekennzeichnet, daß** der besagte zweite Polarisationscontroller (PC') eine Reaktionszeit aufweist, die über derjenigen des ersten Polarisationscontrollers (PC) liegt.

7. Kompensationsvorrichtung gemäß einem oder mehreren der Ansprüche 1 bis 6, **dadurch gekennzeichnet, daß** die besagten Modifikationen des Polarisationszustands des besagten ausgesandten optischen Signals (Sp) aus Änderungen von Einstellgrößen (C') resultieren, wobei die besagten Änderungen diskontiniuerlich und so beschaffen sind, daß jede der besagten Änderungen eine Modifikation der Richtung des Polarisationszustandsvektors des besagten ausgesandten optischen Signals (Sp) von weniger als 10 Grad bewirkt.

8. Kompensationsvorrichtung gemäß Anspruch 7, **dadurch gekennzeichnet, daß** jede der besagten Änderungen eine Modifikation der Richtung des Polarisationszustandsvektors des besagten ausgesandten optischen Signals (Sp) von weniger als 3 Grad bewirkt.

9. Optisches Übertragungssystem, **dadurch gekennzeichnet, daß** es eine Kompensationsvorrichtung gemäß einem oder mehreren der Ansprüche 1 bis 8 beinhaltet.
